# EUROPEAN PATENT APPLICATION

(11) **EP 4 350 613 A1**
(43) Date of publication of application: **10.04.2024**
(21) Application number: 22811421.1
(22) Date of filing: 27.05.2022
(51) Int. Cl.: G06T 7/00

(54) **TRAINED MODEL GENERATING DEVICE, TRAINED MODEL GENERATING METHOD, AND RECOGNITION DEVICE**

(30) Priority: 27.05.2021 JP 2021089565
(71) Applicant: Kyocera Corporation, Kyoto-shi Kyoto 612-8501 (JP)
(72) Inventor: ASATANI, Minami, Kyoto-shi, Kyoto 612-8501 (JP)
(74) Representative: TBK
(86) International application number: PCT/JP2022/021814
(87) International publication number: WO 2022/250153

(57) **Abstract**

A trained model generating device includes a controller. The controller acquires a base model, which includes as least a first base model, generated by performing training using first information as teacher data. The controller generates a target model including a first target model and a second target model by using the first base model as the first target model and training the second target model, coupled to the first target model, using second information as teacher data while coupled to the first target model. The controller acquires an adapter generated by performing pre-training using at least third information as teacher data while coupled to the base model. The controller generates the trained model by coupling the adapter to the target model.

## Description

### CROSS-REFERENCE TO RELATED APPLICATIONS

This application claims priority of Japanese Patent Application No. 2021-89565 (filed May 27, 2021), the entire disclosure of which is hereby incorporated by reference.

### TECHNICAL FIELD

The present disclosure relates to a trained model generating device, a trained model generating method, and a recognition device.

### BACKGROUND OF INVENTION

Heretofore, a known device is configured to identify whether or not a target is included in an identification image by inputting the identification image to a discrimination function generated through training using a training image synthesized from a target sample (see, for example, Patent Literature 1).

### CITATION LIST

### PATENT LITERATURE

Patent Literature 1: Japanese Unexamined Patent Application Publication No. 2016-71502

### SUMMARY

In an embodiment of the present disclosure, a trained model generating device includes a controller configured to generate a trained model that outputs a recognition result of a recognition target contained in input information. The controller acquires a base model, including at least a first base model, generated by performing training using first information identical to or related to the input information as teacher data. The controller generates a target model including a first target model and a second target model by using the first base model as the first target model and training the second target model, coupled to the first target model, using second information representing the recognition target as teacher data while coupled to the first target model. The controller acquires an adapter generated by performing training using at least third information as teacher data while coupled to the base model. The controller generates the trained model by coupling the adapter to the target model.

In an embodiment of the present disclosure, a trained model generating method is executed by a trained model generating device configured to generate a trained model that outputs a recognition result of a recognition target contained in input information. The trained model generating method includes the trained model generating device acquiring a base model, including at least a first base model, generated by performing training using first information identical to or related to the input information as teacher data. The trained model generating method includes the trained model generating device generating a target model including a first target model and a second target model by using the first base model as the first target model and training the second target model, coupled to the first target model, using second information representing the recognition target as teacher data while coupled to the first target model. The trained model generating method includes the trained model generating device acquiring an adapter generated by performing training using at least third information as teacher data while coupled to the base model. The trained model generating method includes the trained model generating device generating the trained model by coupling the adapter to the target model.

In an embodiment of the present disclosure, a recognition device includes a trained model that outputs a recognition result of a recognition target contained in input information. The trained model includes a base model, including at least a first base model, generated by performing training using first information identical to or related to the input information as teacher data. The trained model includes a first target model and a second target model, the first base model being used as the first target model and the second target model generated by performing training using second information representing the recognition target as the teacher data while coupled to the first target model. The trained model includes an adapter generated by performing training using at least third information as teacher data while coupled to the base model. The adapter is coupled to the target model.

### BRIEF DESCRIPTION OF THE DRAWINGS

FIG. 1 is a block diagram illustrating an example configuration of a trained model generating system according to an embodiment.
FIG. 2 is a schematic diagram illustrating a general purpose library and a trained model to which an image adapter is coupled as an adapter.
FIG. 3 is a diagram illustrating an example of an image adapter.
FIG. 4 is a schematic diagram illustrating a general purpose library and a trained model to which a weight adapter is coupled as an adapter.
FIG. 5 is a diagram illustrating an example of a weight adapter.
FIG. 6 is a schematic diagram illustrating generation of a general purpose library by training and generation of a trained model by training and transferring part of the general purpose library to the trained model.
FIG. 7 is a flowchart illustrating example procedures of a general purpose library generating method.
FIG. 8 is a flowchart illustrating example procedures of a trained model generating method.
FIG. 9 is a schematic diagram illustrating an example configuration of a robot control system.

### DESCRIPTION OF EMBODIMENTS

When targets contained in real images are to be recognized using a trained model generated by training using synthesized training images, recognition accuracy may be degraded due to a domain gap, also known as Sim-to-Real. In addition, not limited to Sim-to-Real, recognition accuracy can be degraded due to domain gaps that occur during transfer of a training model. Improved recognition accuracy in the presence of various domain gaps is required. Recognition accuracy can be improved by a trained model generating device, a trained model generating method, and a recognition device according to an embodiment of the present disclosure.

### (Example Configuration of Trained Model Generating System 1)

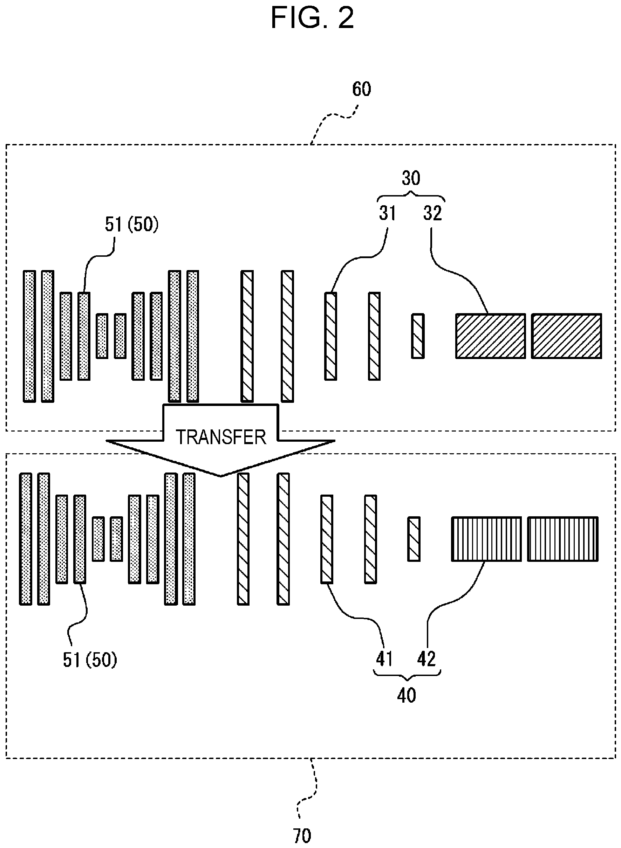

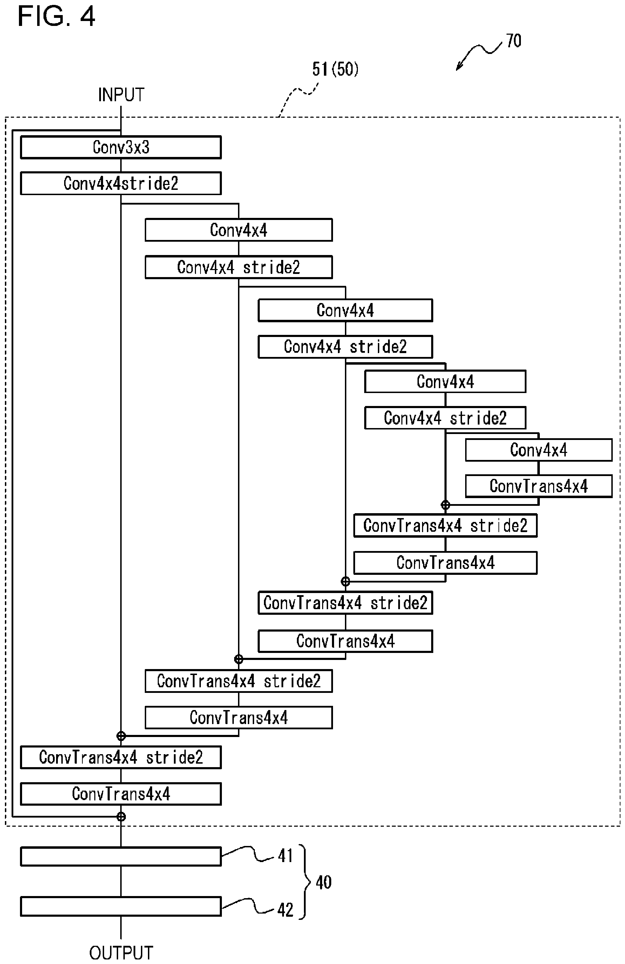

A trained model generating system 1 according to an embodiment of the present disclosure generates a trained model 70 (see FIG. 2 or 4 etc.) that outputs a recognition result of a recognition target contained in input information. The trained model generating system 1 generates a general purpose library 60 (see FIG. 2 or FIG. 4, etc.) as preparation for generating the trained model 70, and generates the trained model 70 based on the general purpose library 60.

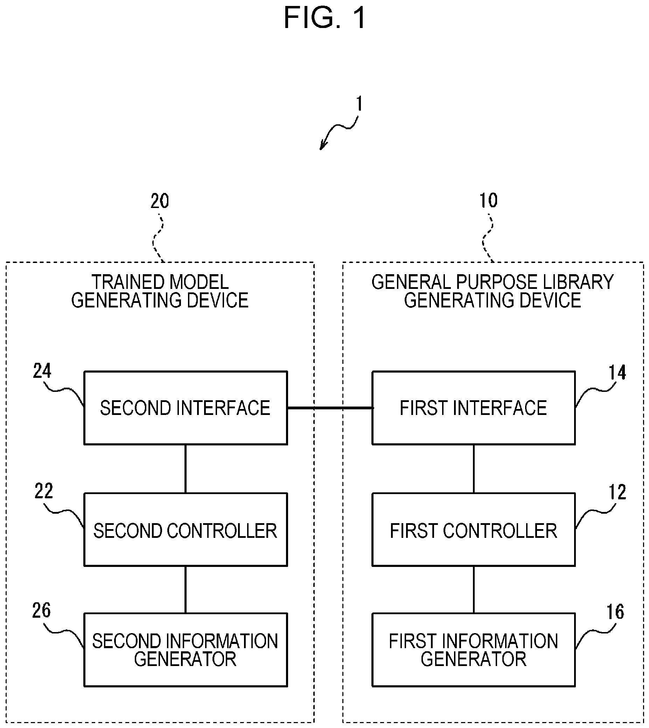

As illustrated in FIG. 1, the trained model generating system 1 according to an embodiment of the present disclosure includes a general purpose library generating device 10 and a trained model generating device 20. The trained model generating system 1 generates the general purpose library 60 using the general purpose library generating device 10 and generates the trained model 70 using the trained model generating device 20. In the trained model generating system 1, the workload of the trained model generating device 20, which generates the trained model 70, can be reduced due to the general purpose library 60 and the trained model 70 being generated in separate devices.

The general purpose library generating device 10 includes a first controller 12, a first interface 14, and a first information generator 16. The trained model generating device 20 includes a second controller 22, a second interface 24, and a second information generator 26. Labels "first" and "second" are added to simply distinguish between the configurations contained in different devices. The first controller 12 and the second controller 22 are also simply referred to as controllers. The first interface 14 and the second interface 24 are also simply referred to as interfaces.

### <First Controller 12 and Second Controller 22>

The first controller 12 of the general purpose library generating device 10 acquires information relating to a target to be used in training from the first information generator 16. The second controller 22 of the trained model generating device 20 acquires information relating to a target to be used in training from the second information generator 26. A target to be used in training is also referred to as a training target. The first controller 12 and the second controller 22 execute training using the information relating to training targets acquired from the first information generator 16 and the second information generator 26 as teacher data, and output information or data based on training results. For example, if the trained model 70 is generated as a model for recognizing a particular object, such as an industrial component, the training target for generating the trained model 70 may include the object itself that is to be recognized, or may include other objects. Objects that can be recognized by the trained model 70 are also referred to as recognition targets.

The first controller 12 and the second controller 22 may each include at least one processor in order to provide control and processing capabilities for performing various functions. The processor may execute programs that implement the various functions of the first controller 12 and the second controller 22. The processor may be implemented as a single integrated circuit. An integrated circuit is also referred to as an IC. The processor may be implemented as multiple integrated circuits and discrete circuits connected to each other so as to be able to communicate with each other. The processor may be realized based on various other known technologies.

The first controller 12 and the second controller 22 may include a storage unit. The storage unit may include an electromagnetic storage medium such as a magnetic disk, or may include a memory such as a semiconductor memory or a magnetic memory. The storage unit stores various types of information. The storage unit stores programs and so forth to be executed by the first controller 12 and the second controller 22. The storage unit may be configured as a non-transient readable medium. The storage unit may serve as a work memory for the first controller 12 and the second controller 22. At least part of the storage unit may be configured to be separate from the first controller 12 and the second controller 22.

### <First Interface 14 and Second Interface 24>

The first interface 14 of the general purpose library generating device 10 and the second interface 24 of the trained model generating device 20 input and output information or data to and from each other. The first interface 14 and the second interface 24 may include a communication device configured to allow wired or wireless communication. The first interface 14 and the second interface 24 are also referred to as communication units. The communication device may be configured to be able to communicate using communication methods based on various communication standards. The first interface 14 and the second interface 24 can be configured using known communication technologies.

The first interface 14 outputs information or data acquired from the first controller 12 to the trained model generating device 20, and outputs information or data acquired from the trained model generating device 20 to the first controller 12. The second interface 24 outputs information or data acquired from the second controller 22 to the general purpose library generating device 10, and outputs information or data acquired from the general purpose library generating device 10 to the second controller 22.

### <First Information Generator 16 and Second Information Generator 26>

The first information generator 16 of the general purpose library generating device 10 outputs to the first controller 12 teacher data to be used in training in the first controller 12. The second information generator 26 of the trained model generating device 20 outputs to the second controller 22 teacher data to be used in training in the second controller 22. The first information generator 16 and the second information generator 26 may generate the teacher data or may acquire the teacher data from an external device.

The first information generator 16 and the second information generator 26 may include at least one processor in order to provide control and processing capabilities for generating or acquiring teacher data. The processor may execute a program for generating or acquiring teacher data. The first information generator 16 and the second information generator 26 may be configured identically or similarly to the first controller 12 and the second controller 22. The first information generator 16 may be configured so as to be integrated with the first controller 12. The second information generator 26 may be configured so as to be integrated with the second controller 22.

The first information generator 16 may generate information representing the actual form of a training target as teacher data. The information representing the actual form of the training target is also referred to as real information. The information representing the actual form of the training target can also be said to be information identical to or related to input information. The first information generator 16 may include a camera that captures a real image of a training target. The first information generator 16 may perform annotation, in which information such as a label is assigned to a real image of a training target. The first information generator 16 may accept an operation input from a user regarding annotation. The first information generator 16 may perform annotation based on a pre-prepared training model for annotation. The first information generator 16 can generate real information by performing annotation on a real image of a training target.

The first information generator 16 and the second information generator 26 virtually generate, as teacher data, information about a training target as information on a task identical to or related to input information input to the trained model 70. For example, if a task is to classify mammals contained in an image, an example of input information would be images depicting organisms including mammals. Information about a training target generated as information on a task identical to the input information is an image of a mammal. Information about the training target that is generated as information on a task related to the input information is, for example, an image of a reptile. The virtually generated information about a training target is also referred to as pseudo information. The pseudo information generated by the first information generator 16 is also referred to as first pseudo information. The pseudo information generated by the second information generator 26 is also referred to as second pseudo information. The first information generator 16 and the second information generator 26 may generate the first pseudo information and the second pseudo information using, for example, the same method, the same specifications, or the same environment. More specifically, when the first information generator 16 and the second information generator 26 virtually generate the first pseudo information and the second pseudo information, the first pseudo information and the second pseudo information may be generated using the same software processing, for example.

The tasks, for example, may include a classification task in which recognition targets contained in input information are classified into at least two categories. The classification task may be, for example, subdivided into a task of distinguishing whether a recognition target is a dog or a cat or a task of distinguishing whether a recognition target is a cow or a horse. Tasks are not limited to classification tasks, and may include tasks in which various other operations are realized. Tasks may include segmentation determined from pixels belonging to a particular target. Tasks may include object detection in which an encompassing rectangular region is detected. Tasks may include estimation of the posture of a target. Tasks may include keypoint detection for finding certain feature points.

Here, if both the input information and the information about the training target are information on classification tasks, then the relationship between the input information and the information about the training target is assumed to be one of related tasks. Furthermore, if both the input information and the information about the training target are information on a task of distinguishing whether the recognition target is a dog or a cat, then the relationship between the input information and the information about the training target is assumed to be one of identical tasks. The relationship between the input information and the information about the training target is not limited to these examples and can be defined using various conditions.

The first information generator 16 and the second information generator 26 may generate information that virtually represents the appearance of the training target in order to generate pseudo information. The first information generator 16 and the second information generator 26 may generate modeling data, for example, three-dimensional computer aided design (CAD) data, of the appearance of the training target, as information that virtually represents the appearance of the training target. The first information generator 16 and the second information generator 26 may generate an image of the training target as information that virtually represents the appearance of the training target. The first information generator 16 and the second information generator 26 may perform annotation to assign information such as labels to modeling data or images and so on that virtually represent the appearance of the training target. The first information generator 16 and the second information generator 26 can generate pseudo information by performing annotation on the generated information that virtually represents the appearance of the training target.

The first information generator 16 and the second information generator 26 may acquire information that virtually represents the appearance of the training target from an external device. The first information generator 16 and the second information generator 26 may accept inputs from the user regarding modeling data. The first information generator 16 and the second information generator 26 may acquire data in which annotations have been made to information that virtually represents the appearance of the training target. The first information generator 16 and the second information generator 26 may accept operation inputs from the user regarding annotations. The first information generator 16 and the second information generator 26 may make annotations to information that virtually represents the appearance of the training target based on a pre-prepared training model for annotation.

### (Examples of General Purpose Library 60 and Trained Model 70)

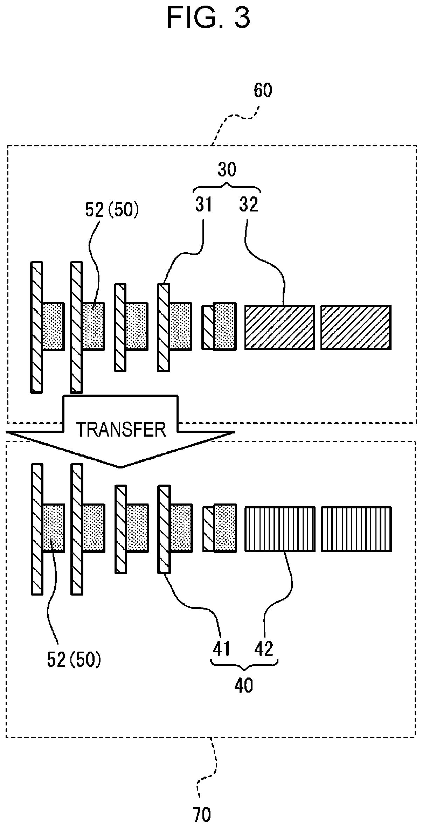

The trained model generating system 1 generates in advance the general purpose library 60 and generates the trained model 70 based on the general purpose library 60. Specifically, the trained model generating system 1 transfers part of the general purpose library 60 to the trained model 70, as illustrated in FIG. 2 and FIG. 3. The general purpose library 60 is represented as a model in which an adapter 50 is coupled to a base model 30. The base model 30 includes a first base model 31 and a second base model 32. In addition, the trained model 70 is represented as a model in which an adapter 50 is coupled to a target model 40. The target model 40 includes a first target model 41 and a second target model 42. The base model 30 and target model 40 are configured as convolution neural networks (CNN) having multiple layers. Convolution based on prescribed weighting factors is performed in each layer of the CNN for information input to the base model 30 and the target model 40. The weighting factors are updated during the training of the base model 30 and the target model 40. The base model 30 and the target model 40 may be configured by a VGG 16 or a ResNet 50. The base model 30 and the target model 40 are not limited to these examples and may be configured as various other types of models.

The part that is transferred from the general purpose library 60 to the trained model 70 is included in both the general purpose library 60 and the trained model 70 and is also referred to as a backbone. In this embodiment, the first base model 31 and the first target model 41 correspond to a backbone. On the other hand, parts that are not shared by the general purpose library 60 and the trained model 70 is also referred to as heads. In this embodiment, the second base model 32 and the second target model 42 correspond to heads. The base model 30 and the target model 40 each include a backbone and a head. The general purpose library 60 and trained model 70 each include a backbone, a head, and the adapter 50.

The backbone is configured to output results obtained by extracting feature values of input information. The feature values represent, for example, features of the appearance of the training target as numerical values. The head is configured to make prescribed judgements about input information based on the output of the backbone. Specifically, the head may output recognition results for recognition targets contained in the input information based on the feature values of the input information output by the backbone. In other words, the head is configured to perform recognition of recognition targets as a prescribed judgement. For example, in a task of distinguishing a horse and a zebra from each other, a feature value could be a parameter representing the proportion of a striped pattern area to the body surface. The prescribed judgement could be to determine whether the recognition target is a horse or a zebra by comparing the proportion of a striped pattern area to the body surface with a threshold. In addition, for example, in a task of distinguishing abalone and tokobushi from each other, the feature value could be a parameter representing size or the number of holes in the shell. The prescribed judgment could be to compare the size or the number of holes in the shell to a threshold to determine whether the recognition target is an abalone or a tokobushi.

The general purpose library generating device 10 generates the base model 30 including the first base model 31 and the second base model 32 through training based on teacher data. The general purpose library generating device 10 generates the adapter 50 by executing training based on teacher data with the adapter 50 coupled to the base model 30 and updating the adapter 50 based on the training results. The general purpose library generating device 10 generates the general purpose library 60 by coupling the adapter 50 to the base model 30.

The trained model generating device 20 acquires the first base model 31 from the general purpose library generating device 10 to use as the first target model 41. In other words, the first target model 41 is identical to the first base model 31. The trained model generating device 20 generates the target model 40 through training based on teacher data. The trained model generating device 20 generates the second target model 42 to match the first target model 41 that has already been acquired. The trained model generating device 20 acquires the adapter 50 from the general purpose library generating device 10. The trained model generating device 20 generates the trained model 70 by coupling the adapter 50 acquired from the general purpose library generating device 10 to the generated target model 40.

In other words, the trained model generating system 1 transfers the first base model 31 from the general purpose library 60 to the trained model 70 as the first target model 41. In addition, the trained model generating system 1 transfers the adapter 50 from the general purpose library 60 to the trained model 70. The first base model 31 may be included in the base model 30, which is trained using the first pseudo information generated by the first information generator 16 as teacher data.

The general purpose library 60 and the trained model 70 illustrated in FIG. 2 include an image adapter 51 as the adapter 50. The image adapter 51 is coupled to the input side of the base model 30 or the target model 40. The image adapter 51 is configured to be able to convert input information before inputting the input information to the base model 30 or the target model 40. The image adapter 51 may be configured as a CNN having multiple layers, as illustrated in FIG. 4.

In the example in FIG. 4, the image adapter 51 is coupled to the input side of the target model 40, but could also be coupled to the input side of the base model 30. Blocks labeled "Conv" indicate that convolution is performed. Convolution is also referred to as down sampling. The blocks labeled "Conv Trans" indicate that inverse convolution is performed. Inverse convolution is also referred to as up sampling. Inverse convolution may also be referred to as reverse convolution. A block labeled "Conv 4x4" indicates that the size of a filter used to perform convolution on 2D data is 4x4. The filter, also called a kernel, corresponds to a set of weighting factors used when performing convolution or inverse convolution of information input to the block. A block labeled "Conv Trans 4x4" indicates that the size of the filter used to perform inverse convolution on 2D data is 4x4. A block labeled "stride 2" indicates that the filter is shifted by two elements when performing convolution or inverse convolution. Conversely, a block not labeled "stride 2" indicates that the filter is shifted by one element when performing convolution or inverse convolution.

When the image adapter 51 is coupled to the input side of the base model 30, the image adapter 51 converts the first pseudo information or real information input for training and outputs the converted first pseudo information or real information to the base model 30. If the first pseudo information or real information is an image, the image adapter 51 converts the input image and outputs the converted image to the base model 30. The image adapter 51, when coupled to the input side of the target model 40, converts and outputs the image of the recognition target contained in the input information input to the trained model 70. The image adapter 51 may also convert the mode of the input image and then output the image. The image adapter 51 may convert the mode of the input image to, for example, but not limited to, a mode in which the edges of the image are emphasized or shadowed areas are brightened and then output the image. The image adapter 51 allows conversion to a mode so that the target model 40 connected thereto can process the task correctly. For example, if the task is to recognize an object contained in an image, the mode is converted so that the base model 30 or the target model 40 can output a result in which the recognition target is correctly recognized.

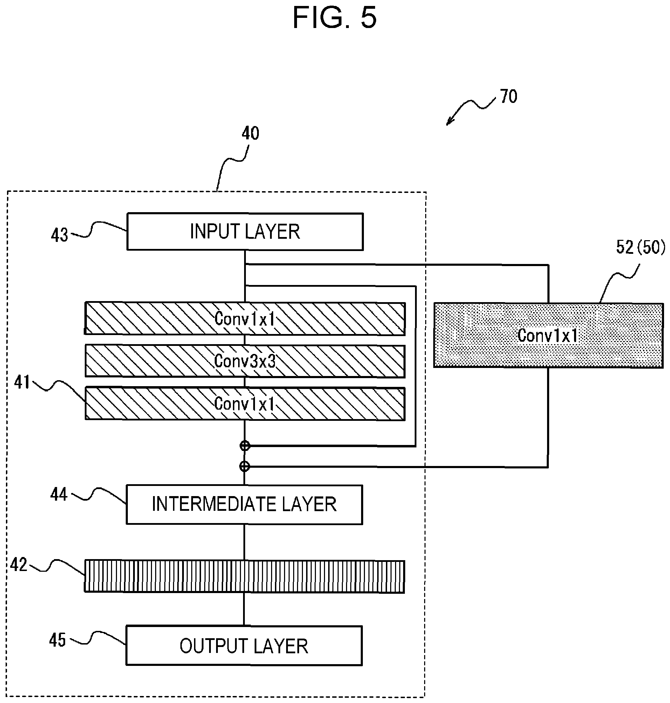

The general purpose library 60 and the trained model 70 illustrated in FIG. 3 each include a weight adapter 52 as the adapter 50. The weight adapter 52 is coupled inside the base model 30 or the target model 40. The weight adapter 52 is coupled inside the base model 30 or the target model 40 and is configured to be able to convert information output by the base model 30 or the target model 40. Referring to FIG. 5, a configuration in which the weight adapter 52 is coupled inside the target model 40 is described below.

The target model 40 includes an input layer 43 to which input information is input, an intermediate layer 44, and an output layer 45 that outputs information from the target model 40. The intermediate layer 44 is coupled to the input layer 43 via the first target model 41. The first target model 41 represents a first relationship determined by a first weighting factor that represents the strength of the coupling between the input layer 43 and the intermediate layer 44. In other words, the intermediate layer 44 is coupled to the input layer 43 via the first target model 41, and is thereby coupled to the input layer 43 in the first relationship. The input information input to the input layer 43 is converted in the first target model 41 based on the first relationship. The information converted from the input information based on the first relationship is also referred to as converted information. The intermediate layer 44 passes the converted information to the output layer 45.

The output layer 45 is coupled to intermediate layer 44 via the second target model 42. The second target model 42 represents a second relationship determined by a second weighting factor that represents the strength of the coupling between the intermediate layer 44 and the output layer 45. In other words, the output layer 45 is coupled to the intermediate layer 44 via the second target model 42, and is thereby coupled to the intermediate layer 44 in the second relationship. The converted information that passes through the intermediate layer 44 is converted in the second target model 42 based on the second relationship. The information obtained by converting the converted information based on the second relationship is also referred to as output information. The output layer 45 outputs output information as a recognition result of the recognition target contained in the input information by using the trained model 70.

In the example in FIG. 5, the weight adapter 52 is coupled in parallel to the first target model 41. The weight adapter 52 may be coupled in parallel to at least one layer of the CNN constituting the target model 40. In the example in FIG. 5, the weight adapter 52 is coupled to first target model 41, but may instead be coupled to the second target model 42. The weight adapter 52 may be coupled to the first base model 31 or the second base model 32. The weight adapter 52 may be configured as a single layer or as two or more layers. A block labeled "Conv 1x1" indicates that convolution is performed on 2D data and that the size of the filter used to perform the convolution is 1x1. A block labeled "Conv 1x1" may be replaced by various other blocks, such as "Conv 3x3".

As a result of being coupled to the first target model 41, the weight adapter 52 influences the conversion of the input information to the converted information. In other words, the weight adapter 52 can convert converted information. As a result of being coupled to the second target model 42, the weight adapter 52 influences the conversion of converted information to output information. In other words, the weight adapter 52 can convert output information. From the above, it can be said that the weight adapter 52 is coupled inside the target model 40 so as to convert at least one out of the converted information and the output information. The weight adapter 52 converts at least one out of the converted information and the output information so that the target model 40 can correctly process the task with respect to the input information.

### (Example Operation of Trained Model Generating System 1)

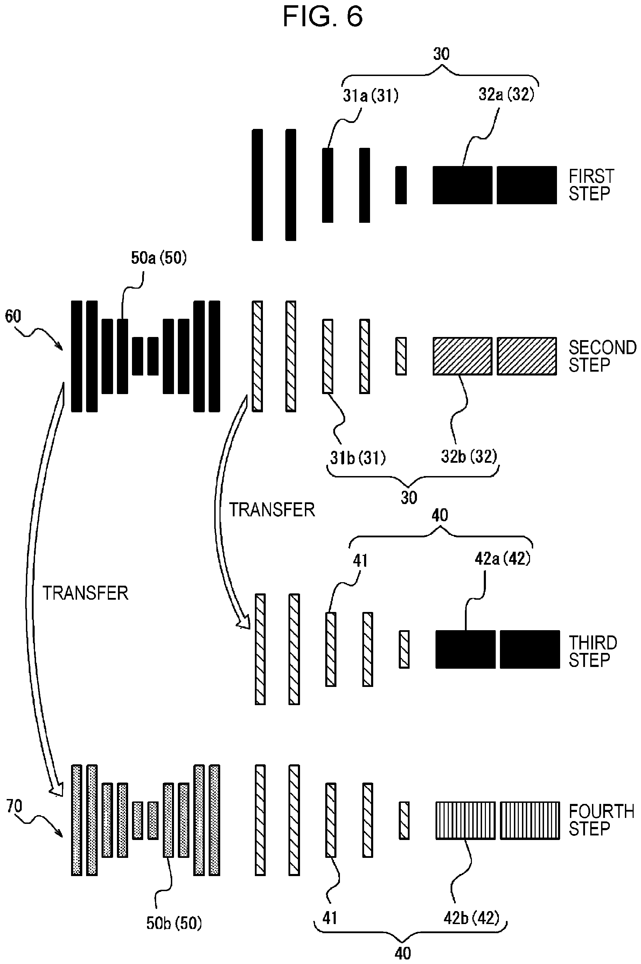

The trained model generating system 1 can generate the trained model 70 by performing the operations schematically illustrated in FIG. 6, for example. The operation of the trained model generating system 1 is described below with reference to FIG. 6.

As a First Step, in the trained model generating system 1, the base model 30 is generated by the general purpose library generating device 10. Specifically, the first controller 12 of the general purpose library generating device 10 acquires the first pseudo information as teacher data from the first information generator 16. The first controller 12 performs training based on the first pseudo information. The first controller 12 inputs the first pseudo information to the base model 30, which includes a first base model 31a and a second base model 32a, which is being trained. The first controller 12 updates the base model 30 to increase the probability that the information output from the base model 30, which is being trained, will be information representing the training target contained in the first pseudo information. The first controller 12 may update the base model 30 by updating the weighting factors. Before training begins, the base model 30 may be in a predefined initial state. In other words, the weighting factors of the base model 30 may set to predetermined initial values. The first base model 31a and the second base model 32a, which are to be updated by training, are represented by black rectangles. By executing the operation described as the First Step, the first controller 12 can generate the base model 30 by performing training based on the first pseudo information.

As a Second Step, in the trained model generating system 1, the adapter 50 is generated by the general purpose library generating device 10. Specifically, the first controller 12 of the general purpose library generating device 10 further acquires real information as teacher data from the first information generator 16. The first controller 12 updates the adapter 50 by performing training based on the first pseudo information and the real information, with the adapter 50 coupled to the base model 30, which includes the trained first base model 31b and second base model 32b generated in the First Step. The first controller 12 may update the adapter 50 by updating the weighting factors of the adapter 50. Before training begins, the adapter 50 coupled to the base model 30 may be in a predefined initial state. In other words, the weighting factors of the adapter 50 may be set to predetermined initial values. The first controller 12 inputs the first pseudo information and the real information to the general purpose library 60, in which the adapter 50a being trained is coupled to the trained base model 30 generated in the First Step. The first controller 12 updates the adapter 50 so that the information output from the general purpose library 60 to which the first pseudo information is input is closer to the information output from the general purpose library 60 to which the real information is input. The first controller 12 may update the adapter 50 to increase the probability that the information output from the general purpose library 60 that is input with the first pseudo information matches the information output from the general purpose library 60 that is input with the real information. The adapter 50a, which is to be updated by training, is represented by a black rectangle. By executing the operation described as the Second Step, the first controller 12 can generate the adapter 50 by performing training based on the first pseudo information and the real information. Training based on the first pseudo information and the real information is also referred to as pre-training because this training is performed prior to the training in the Third Step, which is described below.

As a Third Step, in the trained model generating system 1, the target model 40 is generated by the trained model generating device 20. Specifically, the second controller 22 of the trained model generating device 20 acquires the second pseudo information from the second information generator 26 as teacher data. The second controller 22 acquires the first base model 31 generated in the First Step as the first target model 41. The second controller 22 performs training by inputting the second pseudo information to the target model 40, which includes the acquired first target model 41 and a second target model 42a, which is being trained, and updates the second target model 42a, which is being trained. The second controller 22 may update the second target model 42a by updating the weighting factors of the second target model 42a. The second target model 42a, which is being trained, may be set to a predefined initial state before training begins. In other words, the weighting factors of the second target model 42a, which is being trained, may be set to predetermined initial values. The second controller 22 updates the second target model 42a to increase the probability that information output from the target model 40, which is being trained, will be information representing the training target contained in the second pseudo information. The second target model 42a, which is to be updated by training, is represented by a black rectangle. By executing the operation described as the Third Step, the second controller 22 can generate the second target model 42 through training based on the second pseudo information and generate the target model 40 including the acquired first target model 41 and the generated second target model 42. In the Third Step, the second controller 22 generates only the second target model 42 through training.

In the trained model generating system 1, the trained model 70 is generated by the trained model generating device 20 as a Fourth Step. Specifically, the second controller 22 of the trained model generating device 20 acquires the adapter 50 generated in the Second Step. The adapter 50 acquired by the second controller 22 is represented as a trained adapter 50b. The second controller 22 generates the trained model 70 by coupling the trained adapter 50b to the target model 40, which includes the first target model 41 acquired in the Third Step and a trained second target model 42b generated in the Third Step.

The trained model generating system 1 may perform the operations described above as the procedures of a trained model generating method. The operations described above can be divided into operations performed by the general purpose library generating device 10 and operations performed by the trained model generating device 20. Hereafter, example procedures of operations performed by the general purpose library generating device 10 and the trained model generating device 20 will be described.

### <General Purpose Library Generating Method>

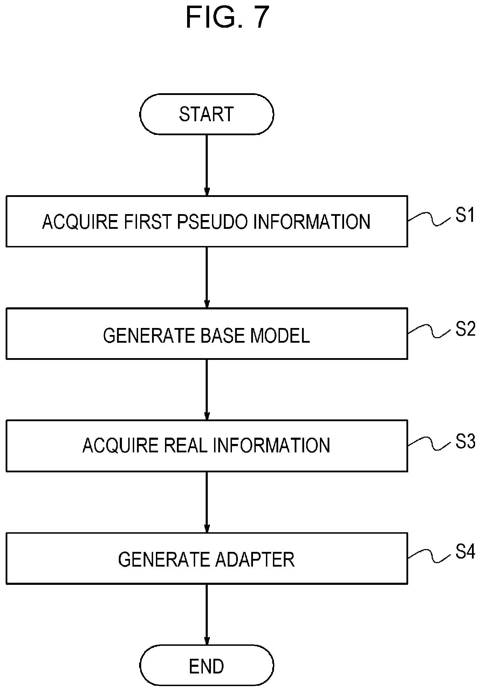

The general purpose library generating device 10 may execute a general purpose library generating method including the procedures of the flowchart illustrated in FIG. 7. The general purpose library generating method may be realized as a general purpose library generating program to be executed by a processor included in the general purpose library generating device 10. The general purpose library generating program may be stored on a non-transitory computer readable medium.

The first controller 12 of the general purpose library generating device 10 acquires the first pseudo information from the first information generator 16 (Step S1). The first controller 12 generates the base model 30 through training based on the first pseudo information (Step S2). The first controller 12 further acquires real information from first information generator 16 (Step S3). The first controller 12 generates the adapter 50 through training based on the first pseudo information and the real information (Step S4). After execution of the procedure of Step S4, the first controller 12 completes execution of the procedures of the flowchart in FIG. 7. After performing the procedure of Step S4, the first controller 12 may output the generated first base model 31 and adapter 50 to the trained model generating device 20.

### <Trained Model Generating Method>

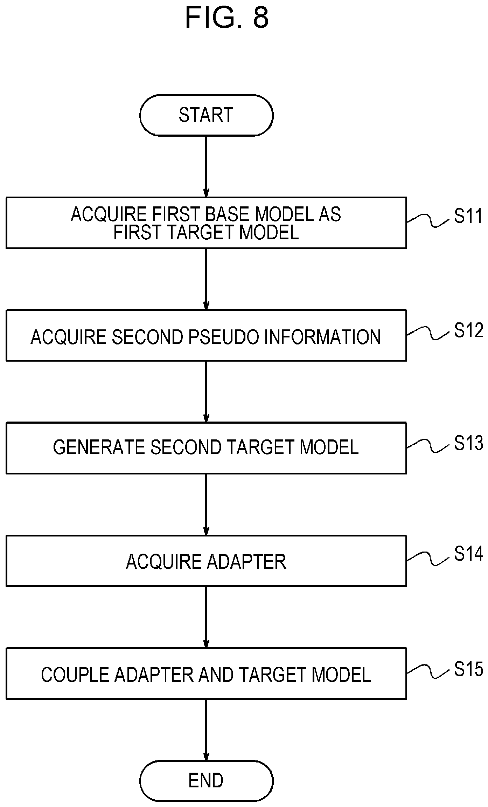

The trained model generating device 20 may execute a trained model generating method that includes the procedures of the flowchart illustrated in FIG. 8. The trained model generating method may be realized as a trained model generating program to be executed by a processor included in the trained model generating device 20. The trained model generating program may be stored on a non-transitory computer readable medium.

The second controller 22 of the trained model generating device 20 acquires the first base model 31 from the general purpose library generating device 10 as the first target model 41 (Step S11). The second controller 22 acquires second pseudo information from the second information generator 26 (Step S12). The second controller 22 generates the second target model 42 through training based on the second pseudo information (Step S13). The second controller 22 acquires the adapter 50 from the general purpose library generating device 10 (Step S14). The second controller 22 couples the adapter 50 to the target model 40, which includes the acquired first target model 41 and the generated second target model 42 (Step S15). In this way, the second controller 22 can generate the trained model 70 that includes the adapter 50 and the target model 40. After execution of the procedure of Step S 15, the second controller 22 completes execution of the procedures of the flowchart in FIG. 8. After executing the procedure of Step S 15, the second controller 22 may input the input information to the generated trained model 70 and evaluate the recognition accuracy of a recognition target contained in the input information based on an output of the trained model 70.

### <Summary>

As discussed above, the trained model generating system 1 according to this embodiment can generate the trained model 70 by executing the general purpose library generating method and the trained model generating method in different devices. The trained model generating system 1 performs training based on real information to generate the general purpose library 60, thereby eliminating the need to perform training based on real information to generate the trained model 70. The trained model generating system 1 causes the trained model generating device 20 to perform the operation of generating the trained model 70, and consequently, the trained model generating device 20 only needs to perform an operation that does not include training based on real information. As a result, the operational load of the trained model generating device 20 can be reduced.

In the trained model generating system 1, the general purpose library generating device 10 is also referred to as an upstream device. The general purpose library 60 generated by training performed in the general purpose library generating device 10, which is the upstream device, is also referred to as an upstream task. An upstream task is generated by the service provider through training performed in advance. The trained model generating device 20 is also referred to as a downstream device. The trained model 70, which is generated by training performed in the trained model generating device 20, which is in the downstream device, is also referred to as a downstream task. A downstream task is generated so that the end user of the service can improve the recognition accuracy of a desired recognition target through training for the desired recognition target.

In a downstream task, the system is required to start operating quickly with little effort needed to acquire data or by generating the trained model 70 in a short training time. On the other hand, in an upstream task, transition training can involve the use of large amounts of data and computational resources in advance in order to provide a high-quality meta-model with high speed and high generalization performance. In the trained model generating system 1 according to this embodiment, since larger amounts of data and computational resources are used in the upstream device to generate an upstream task, a downstream task can be generated by only performing training based on pseudo information that can be prepared with a lower load than real information in the downstream device, and therefore the system is able to start operating more quickly.

If training based on real information is not performed in a downstream task, a domain gap called Sim-to-Real can be a problem. The trained model generating system 1 according to this embodiment can improve recognition accuracy for real information even in downstream tasks in which training is not performed based on real information by transferring the adapter 50 for domain adaptation from an upstream task to a downstream task. In other words, the base model 30 included in an upstream task is generated by performing training so as to increase recognition accuracy for pseudo information. In this case, the recognition accuracy for real information is lower than the recognition accuracy for pseudo information, but can be improved by being corrected using the adapter 50.

As a result of having the configuration described above, the trained model generating system 1 can be said to propose a new framework for training upstream tasks as an alternative to downstream tasks. The new framework that can be proposed by the trained model generating system 1 according to this embodiment is also referred to as task rehearsal bridging (TRB).

The trained model generating system 1 according to this embodiment can apply the image adapter 51 or the weight adapter 52 as the adapter 50. The trained model generating system 1 can substitute downstream tasks with upstream tasks by generating upstream tasks based on the results of training the adapter 50 based on pseudo information and real information. The fact that upstream devices learn based on real information while downstream devices do not need to learn based on real information reduces the computational load on downstream devices. As a result, rapid availability of downstream tasks can be achieved.

### <Comparison of Recognition Accuracy>

When a recognition target is recognized from input information including real images using a model generated by training based only on generated images, which are pseudo information, the recognition accuracy is reduced due to the differences between the generated images and real images. Specifically, in a model that can recognize a recognition target with a probability of close to 100% for a generated image, the probability of recognizing a recognition target for a real image can be as low as 70%.

The trained model 70 according to this embodiment is generated as a model obtained by coupling the adapter 50 to the target model 40. The adapter 50 can correct errors in recognition results caused by differences between generated images and real images. As a result, the probability of recognizing a recognition target for a real image can be as high as 90%. In other words, when the adapter 50 is coupled, the probability of recognizing a recognition target can be increased compared to the case where the adapter 50 is not coupled.

### (Example Configuration of Robot Control System 100)

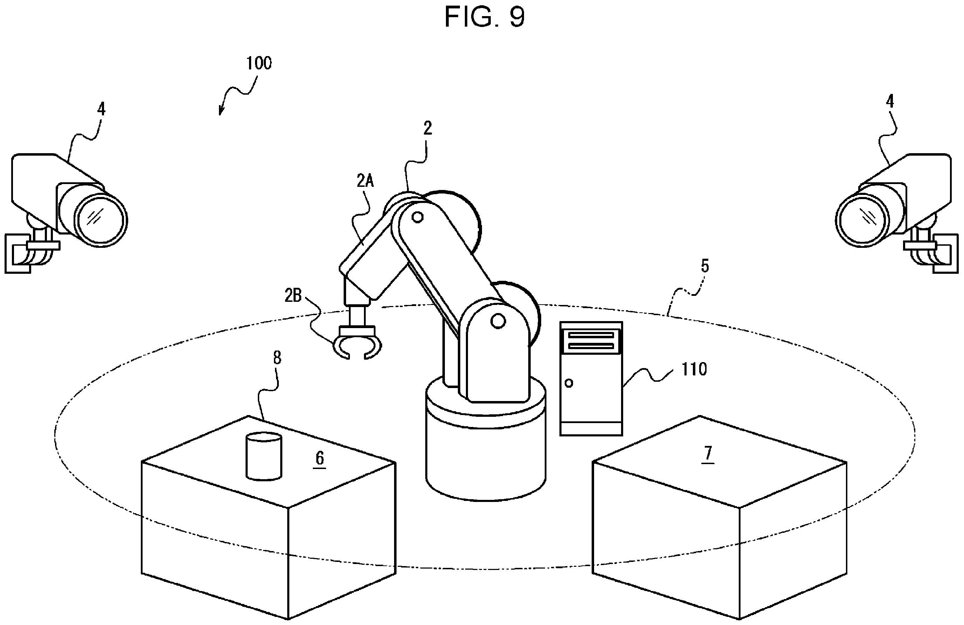

As illustrated in FIG. 9, a robot control system 100 according to an embodiment includes a robot 2 and a robot controller 110. In this embodiment, the robot 2 is assumed to move a work target 8 from a work start point 6 to a work destination point 7. In other words, the robot controller 110 controls the robot 2 so that the work target 8 is moved from the work start point 6 to the work destination point 7. The work target 8 is also referred to as a target of work. The robot controller 110 controls the robot 2 based on information about the space in which the robot 2 will perform the work. Information about space is also referred to as spatial information.

### <Robot 2>

The robot 2 includes an arm 2A and an end effector 2B. The arm 2A may be configured, for example, as a 6-axis or 7-axis vertically articulated robot. The arm 2A may be configured as a 3-axis or 4-axis horizontally articulated robot or a SCARA robot. The arm 2A may be configured as a 2-axis or 3-axis perpendicular robot. The arm 2A may be configured as a parallel link robot or the like. The number of axes of the arm 2A is not limited to those in the given examples. In other words, the robot 2 includes the arm 2A connected by multiple joints and is operated by driving the joints.

The end effector 2B may include, for example, a grasping hand configured to be able to grasp the work target 8. The grasping hand may include multiple fingers. The number of fingers on the grasping hand may be two or more. The fingers of the grasping hand may include one or more joints. The end effector 2B may include a suction hand configured to be able to apply suction to the work target 8. The end effector 2B may include a scooping hand configured to be able to scoop up the work target 8. The end effector 2B may include a tool such as a drill and may be configured to be able to perform various machining operations such as drilling holes in the work target 8. The end effector 2B is not limited to these examples and may be configured to be able to perform a variety of other operations. In the configuration illustrated in FIG. 1, the end effector 2B is assumed to include a grasping hand.

The robot 2 can control the position of end effector 2B by moving the arm 2A. The end effector 2B may have axes serving as references for directions of action with respect to the work target 8. If the end effector 2B has axes, the robot 2 can control the directions of the axes of the end effector 2B by moving the arm 2A. The robot 2 controls the start and end of an operation in which the end effector 2B acts on the work target 8. The robot 2 can move or process the work target 8 by controlling the operation of the end effector 2B while controlling the position of the end effector 2B or the directions of the axes of the end effector 2B. In the configuration illustrated in FIG. 1, the robot 2 makes the end effector 2B grasp the work target 8 at the work start point 6 and moves the end effector 2B to the work destination point 7. The robot 2 makes the end effector 2B release the work target 8 at the work destination point 7. In this way, the robot 2 can move the work target 8 from the work start point 6 to the work destination point 7.

### <Sensor 3>

As illustrated in FIG. 2, the robot control system 100 further includes a sensor 3. The sensor 3 detects physical information of the robot 2. The physical information of the robot 2 may include information about the actual position or posture of each constituent part of the robot 2 or the velocity or acceleration of each constituent part of the robot 2. The physical information of the robot 2 may include information about the forces acting on each constituent part of the robot 2. The physical information of the robot 2 may include information about the currents flowing in the motors that drive the various constituent parts of the robot 2 or the torques of the motors. The physical information of the robot 2 represents the results of actual operations of the robot 2. In other words, the robot control system 100 can ascertain the results of the actual operations of the robot 2 by acquiring the physical information of the robot 2.

The sensor 3 may include a force sensor or a tactile sensor that detects force, distributed pressure, or sliding acting on the robot 2 as the physical information of the robot 2. The sensor 3 may include a motion sensor that detects the position or posture of the robot 2, or the velocity or acceleration of the robot 2 as physical information of the robot 2. The sensor 3 may include a current sensor that detects a current flowing in a motor that drives the robot 2 as physical information of the robot 2. The sensor 3 may include a torque sensor that detects the torque of a motor driving the robot 2 as physical information of robot 2.

The sensor 3 may be installed in the joints of the robot 2 or in a joint driving unit that drives the j oints. The sensor 3 may be installed on or in the arm 2A or on or in the end effector 2B of the robot 2.

The sensor 3 outputs the detected physical information of the robot 2 to the robot controller 110. The sensor 3 detects and outputs physical information of the robot 2 at a prescribed timing. The sensor 3 outputs physical information of the robot 2 as time-series data.

### <Camera 4>

In the example configuration illustrated in FIG. 1, the robot control system 100 includes two cameras 4. The cameras 4 capture images of objects or humans and so on located in an influence range 5 in which operation of the robot 2 may be affected by the objects, humans, and so on. The images captured by the cameras 4 may contain monochrome luminance information, or may contain luminance information for each color represented by red, green, and blue (RGB), and so on. The influence range 5 includes the range of motion of the robot 2. Let us assume that the influence range 5 is a range obtained by extending the range of motion of robot 2 further outward. The influence range 5 may be set so that the robot 2 can be stopped before a human or the like enters the range of motion of the robot 2 when the human or the like is moving from outside the range of motion of the robot 2 toward the inside of the range of motion of the robot 2. The influence range 5 may be set, for example, to a range extending outward by a prescribed distance from the boundary of the range of motion of the robot 2. The cameras 4 may be installed so as to be able to capture a bird's eye view of the influence range 5 or range of motion of the robot 2 or the area surrounding these areas. The number of cameras 4 is not limited to two, and may be one or three or more.

### <Robot Controller 110>

The robot controller 110 acquires the trained model 70 generated by the trained model generating device 20. Based on images captured by the cameras 4 and the trained model 70, the robot controller 110 recognizes the work target 8 or the work start point 6 or the work destination point 7 and so on that exist in the space in which the robot 2 performs work. In other words, the robot controller 110 acquires the trained model 70 that has been generated in order to recognize the work target 8 and so on based on images captured by the cameras 4. The robot controller 110 is also referred to as a recognition device.

The robot controller 110 may include at least one processor in order to provide control and processing capabilities for performing various functions. Each part of the robot controller 110 may include at least one processor. Multiple parts among the parts of the robot controller 110 may be implemented using a single processor. The entire robot controller 110 may be realized using a single processor. The processor can execute programs that realize various functions of the robot controller 110. The processor may be implemented as a single integrated circuit. An integrated circuit is also referred to as an IC. The processor may be implemented as multiple integrated circuits and discrete circuits connected to each other so as to be able to communicate with each other. The processor may be realized based on various other known technologies.

The robot controller 110 may include a storage unit. The storage unit may include an electromagnetic storage medium such as a magnetic disk, or may include a memory such as a semiconductor memory or a magnetic memory. The storage unit stores various information and programs executed by the robot controller 110. The storage unit may be configured as a non-transient readable medium. The storage unit may function as a work memory of the robot controller 110. At least part of the storage unit may be configured so as to be separate from the robot controller 110.

### (Example Operation of Robot Control System 100)

The robot controller 110 (recognition device) acquires the trained model 70 in advance. The robot controller 110 may store the trained model 70 in the storage unit. The robot controller 110 acquires captured images of the work target 8 from the cameras 4. The robot controller 110 inputs the captured images of the work target 8 to the trained model 70 as input information. The robot controller 110 acquires output information output from the trained model 70 in response to the input information. The robot controller 110 recognizes the work target 8 based on the output information and performs work of grasping and moving the work target 8.

### <Summary>

As described above, the robot control system 100 acquires the trained model 70 from the trained model generating system 1 and can recognize the work target 8 by using the trained model 70.

### (Other Embodiments)

Other embodiments are described below.

### <Handling Various Domain Gaps>

In the above-described embodiment, a configuration was described that reduces the effect of Sim to Real domain gaps on recognition accuracy that can occur when a model trained using pseudo data is transferred to be used in recognition of real data. Various domain gaps can arise when the trained model 70 is transferred, not limited to the examples described above. The trained model generating system 1 according to this embodiment can be configured to reduce the effect of various domain gaps on recognition accuracy. For example, the effect on recognition accuracy of domain gaps that can occur when a model is transferred in order to recognize data different from the teacher data used in upstream learning can be reduced.

For example, let us assume that a trained model has been generated using real images as the teacher data in upstream training. This model can be transferred in order to recognize images captured in an environment different from the environment in which the images of the teacher data were captured. For example, the environment can include changes in the lighting environment. In this case, domain gaps can occur due to changes in the image-capturing environment, for example, changes in lighting. The trained model generating system 1 according to this embodiment can reduce the effect of various domain gaps, such as domain gaps that may arise from changes in the image-capturing environment, on the recognition accuracy.

As discussed above, data used for training models in this embodiment may include real data as well as pseudo data, or may include real data instead of pseudo data. For example, if domain gaps caused by changes in the image-capturing environment are a problem, as described above, for example, the base model 30 and the target model 40 may be image data of real objects that are training targets. The adapter 50 may be image data obtained in a real environment where work is carried out on a real object that is a training target, or image data obtained by simulating a real environment. In this case, the first pseudo information and the second pseudo information described in the above embodiment are also referred to as first information and second information, respectively. In addition, real information, which was distinguished from pseudo information, is also referred to as third information in order to be distinguished from the first information and the second information. In this case, the first information generator 16 and the second information generator 26 may generate the first and second information and so on by using cameras or other devices having the same specifications.

The first controller 12 of the general purpose library generating device 10 may generate the base model 30 including at least the first base model 31 through training using the first information as teacher data. The first controller 12 may generate the adapter 50 by performing training with the adapter 50 coupled to the base model 30. The second controller 22 of the trained model generating device 20 may acquire the base model 30, which includes at least the first base model 31, and the adapter 50. The second controller 22 may generate the target model 40, which includes the first target model 41 and the second target model 42, by using the first base model 31 as the first target model 41 and training the second target model 42, which is coupled to the first target model 41, using the second information as teacher data while being coupled to the first target model 41. The second controller 22 may generate the trained model 70 by coupling the acquired adapter 50 with the generated target model 40.

### <Loss Function>

The trained model generating system 1 may set a loss function so that the output when input information is input to the generated trained model 70 becomes closer to the output when teacher data is input. In this embodiment, cross-entropy can be used as the loss function. Cross-entropy is calculated as a value representing the relationship between two probability distributions. Specifically, in this embodiment, cross-entropy is calculated as a value representing the relationship between input pseudo information or real information and the backbone, the head, or the adapter 50.

The trained model generating system 1 performs training such that the value of the loss function becomes smaller. In the trained model 70 generated by performing training so that the value of the loss function becomes smaller, the output in response to input of input information can approach the output in response to input of teacher data. For example, discrimination loss or contrastive loss may be used as a loss function. Discrimination loss is a loss function used to perform training by labeling the authenticity of a generated image with a number between 1, which represents completely true, and 0, which represents completely false.

Embodiments of the trained model generating system 1 and the robot control system 100 have been described above. Embodiments of the present disclosure can be a method or program for implementing a system or device, as well as a storage medium on which a program is recorded (for example, an optical disk, an optical-magnetic disk, a CD-ROM, CD-R, CD-RW, magnetic tape, hard disk, or memory card, and so on.).

The embodiment of a program is not limited to an application program such as object code compiled by a compiler or program code executed by an interpreter, and can also take the form of a program module or the like incorporated into an operating system. Furthermore, the program may or may not be configured so that all processing is performed only in a CPU on a control board. The program may be configured to be implemented entirely or partially by another processing unit mounted on an expansion board or expansion unit added to the board as necessary.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts.

All of the constituent elements described in the present disclosure and/or all of the disclosed methods or all of the steps of disclosed processing can be combined in any combination, except for combinations in which their features are mutually exclusive. Each of the features described in the present disclosure may be replaced by alternative features that serve the same, equivalent, or similar purposes, unless explicitly stated otherwise. Therefore, unless explicitly stated otherwise, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

In the present disclosure, "first", "second", and so on are identifiers used to distinguish between such configurations. Regarding the configurations, "first", "second", and so on used to distinguish between the configurations in the present disclosure may be exchanged with each other. For example, identifiers "first" and "second" may be exchanged between the first pseudo information and the second pseudo information. Exchanging of the identifiers take places simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in the present disclosure is not to be used as a basis for interpreting the order of such configurations or the existence of identifiers with smaller numbers.

### REFERENCE SIGNS

1 trained model generating system
10 general purpose library generating device (12: first controller, 14: first interface, 16: first information generator)
20 trained model generating device (22: second controller, 24: second interface, 26: second information generator)
30 base model (31: first base model (31a: being trained, 31b: trained)), 32: second base model (32a: being trained, 32b: trained)
40 target model (41: first target model, 42: second target model (42a: being trained, 42b: trained))
50 adapter (50a: being trained, 50b: trained)
60 general purpose library
70 trained model
100 robot control system (2: robot, 2A: arm, 2B: end effector, 3: sensor, 4: camera, 5: robot influence range, 6: work start stand, 7: work destination stand, 8: work target, 110: robot controller (recognition device))

## Claims

1. A trained model generating device comprising:
a controller configured to generate a trained model that outputs a recognition result of a recognition target contained in input information,
wherein the controller
acquires a base model, including at least a first base model, generated by performing training using first information identical to or related to the input information as teacher data,
generates a target model including a first target model and a second target model by using the first base model as the first target model and training the second target model, coupled to the first target model, using second information identical to or related to the input information as teacher data while coupled to the first target model,
acquires an adapter generated by performing training using at least third information identical to or related to the input information as teacher data while coupled to the base model, and
generates the trained model by coupling the adapter to the target model.

2. The trained model generating device according to claim 1,
wherein the adapter is coupled to an input side of the target model, and is configured to be capable of converting the input information prior to inputting the input information to the target model.

3. The trained model generating device according to claim 1,
wherein the target model includes an input layer to which the input information is input, an intermediate layer that is coupled to the input layer, and an output layer that is coupled to the intermediate layer,
the intermediate layer is coupled to the input layer in a first relationship determined by a first weighting factor representing strength of coupling to the input layer, and the intermediate layer passes converted information to the output layer, the converted information obtained by the input information being converted based on the first relationship,
the output layer is coupled to the intermediate layer in a second relationship determined by a second weighting factor representing strength of coupling to the intermediate layer, and output information obtained by converting the converted information based on the second relationship is output as the recognition result of the recognition target contained in the input information by the trained model, and
the adapter is coupled inside the target model and converts at least one out of the converted information and the output information.

4. The trained model generating device according to any one of claims 1 to 3,
wherein the adapter is generated through pre-training using the third information and the first information as teacher data.

5. The trained model generating device according to any one of claims 1 to 4,
wherein the second target model is obtained by training only the second base model coupled to the first target model using the second information as teacher data.

6. The trained model generating device according to any one of claims 1 to 5,
wherein the first information, the second information, the third information, and input information contain an image,
the adapter coupled to the base model converts and then outputs the image of the input first information or third information, and
the adapter coupled to the target model converts and outputs an image of the recognition target contained in the input information that is input.

7. The trained model generating device according to any one of claims 1 to 6,
wherein the first target model outputs a result of extracting a feature value of the input information, and the second target model makes a prescribed judgement for the input information based on an output of the first target model.

8. The trained model generating device according to any one of claims 1 to 7,
wherein the first information, the second information, the third information, and input information contain an image, and
the adapter converts a mode of an input image and outputs the image.

9. A trained model generating method executed by a trained model generating device configured to generate a trained model that outputs a recognition result of a recognition target contained in input information, the trained model generating method comprising:
the trained model generating device acquiring a base model, including at least a first base model, generated by performing training using first information identical to or related to the input information as teacher data,
the trained model generating device generating a target model including a first target model and a second target model by using the first base model as the first target model and training the second target model, coupled to the first target model, using second information representing the recognition target as teacher data while coupled to the first target model,
the trained model generating device acquiring an adapter generated by performing training using at least third information as teacher data while coupled to the base model, and
the trained model generating device generating the trained model by coupling the adapter to the target model.

10. A recognition device comprising:
a trained model that outputs a recognition result of a recognition target contained in input information,
wherein the trained model includes a base model, including at least a first base model, generated by performing training using first information identical to or related to the input information as teacher data,
a target model including a first target model and a second target model, the first base model being used as the first target model and the second target model generated by performing training using second information representing the recognition target as the teacher data while coupled to the first target model, and
an adapter generated by performing training using at least third information as teacher data while coupled to the base model, and
the adapter is coupled to the target model.
